(19) Europäisches Patentamt
European Patent Office
Office européen des brevets

(11) **EP 4 390 578 A1**

(12) **EUROPEAN PATENT APPLICATION**

(43) Date of publication:
**26.06.2024 Bulletin 2024/26**

(51) International Patent Classification (IPC):
***G05B 13/02*** *(2006.01)*

(21) Application number: **22214968.4**

(52) Cooperative Patent Classification (CPC):
**G05B 13/024; G05B 13/026**

(22) Date of filing: **20.12.2022**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **AVL List GmbH**
**8020 Graz (AT)**

(72) Inventor: **Gregorcic, Gregor**
**8047 Graz (AT)**

(74) Representative: **Patentanwälte Pinter & Weiss OG**
**Prinz-Eugen-Straße 70**
**1040 Wien (AT)**

(54) **METHOD FOR CONTROLLING A TECHNICAL SYSTEM**

(57) For a parametrization method for parameterizing a control parameter ($P_i$) of a controller (2a) for controlling a technical system (3) that requires little overall computational time and effort a stochastic process model (SPM) is used to iteratively model a parameter-cost-relation (PJ) in the possible range ($R_i$) of parameter values ($SP_i$), the parameter-cost-relation (PJ) defining a dependence of a defined cost function value ($J_j$) from the parameter value ($SP_i$) of the at least one parameter ($P_i$). With the stochastic process model (SPM) a predicted mean value $\hat{\mu}_{N+1}$ and a predicted variance $\hat{\sigma}^2_{N+1}$ are determined and, form that, an upper confidence bound $\sigma_U$ and/or a lower confidence bound $\sigma_L$ around the predicted mean value $\hat{\mu}_{N+1}$ for different parameter values ($SP_{N+1j}$) are determined. A minimum ($\sigma_{min}$) of the lower confidence bound ($\sigma_L$) or a maximum ($\sigma_{max}$) of the upper confidence bound ($\sigma_U$) in the possible range ($R_i$) of parameter values ($SP_i$) is searched in each iteration step j and the parameter value ($SP_{ij+1}$) associated to the minimum ($\sigma_{min}$) or maximum ($\sigma_{max}$) in the last iteration is used as the optimized parameter value ($SP_{i,opt}$) of the at least one control parameter ($P_i$) with which the control parameter ($P_i$) is parameterized for controlling the technical system (1).

Fig. 7c

EP 4 390 578 A1

**Description**

The present invention pertains to a method for controlling a technical system with a closed loop control with a controller having at least one control parameter, wherein the at least one control parameter of the controller is tuned by setting a parameter value of the at least one control parameter to an optimized parameter value and wherein the technical system is controlled with the at least one control parameter being parametrized with the value of the optimized parameter value.

In general, closed loop controls are designed to be applied in a multitude of applications, for example for controlling machines, industrial processes etc., or certain parts thereof. Closed control loops utilize a controller having a number of control parameters that is tuned to achieve a desired closed loop control behavior (for example settling time, overshoot, control error). Tuning happens by setting at least one control parameter of the controller to a certain value. Which control parameters need to be tuned is defined by the implemented controller. A well-known PID (proportional, integral, and derivative) controller has three control parameters, for example, namely a proportional gain, an integral gain and a derivative gain. Common closed loop designs rely on a pre-adjustment of the control parameter(s). This pre-adjustment of the control parameter, also called tuning or parametrization, can be highly time-consuming and is often based on empirical knowledge of the skilled engineer in charge.

Furthermore, real industrial processes often show deviation over time. This deviation can happen due to gradual degradation of the controlled system, changes in environmental conditions or also changes or variations of raw materials used in the process. Exemplarily, an electrical machine may show degradation or failure in the windings, in the rotor, in a squirrel cage runner due to production errors, gas inclusion, thermal overload and further. There may be several reasons a technical system shows a deviation or a degradation over time. Due to these deviations, a predefined value of a control parameter in the closed loop control may not be suitable after a certain time anymore. The closed loop control may not perform as desired anymore or even degrade to the point of process instability.

For the given reasons it is necessary to quickly find the best initial control parameter(s) in the parametrization process, and to be able to adapt the control parameter(s) during the process in case deviations or degradation of the controlled technical system occur (also called self-tuning). Methods for parameterization and self-tuning of a controller are well-known, for both linear and nonlinear processes. Known methods for parameterization of a controller are the Ziegler-Nichols and Cohen-Coon methods, for example. A self-tuning controller includes a self-tuning function that tries to maintain desired closed-loop performance by continuously, regularly or at certain time points updating the control parameter(s). Many self-tuning techniques are based on mathematical optimization approaches. An overview of such methods is given in G. Gregorcic and G. Lightbody, "A comparison of multiple model and pole-placement self-tuning for the control of highly nonlinear processes.", Proceedings of the Irish Signals and Systems Conference, pages 303-311, Dublin, Ireland, Jun. 2000 or G. Gregorcic and G. Lightbody, "Nonlinear model based control of highly nonlinear processes", Computer & Chemical Engineering, 34(8), pages 1268-1281 August 2010.

There is a basic desire to shorten the computational time and overall effort required for parametrization of a controller, especially in course of self-tuning.

It is an object of the present invention to provide a parametrization method for parameterizing control parameter(s) of a controller that requires little overall computational time and little overall effort.

This object is solved in accordance with claim 1. According to the invention, a stochastic process model is used and the property of the stochastic process model is utilized in order to iteratively model the parameter-cost relation. The modelling of the parameter-cost relation with a stochastic process model can be performed effectively and with little overall computational time. This is due to the fact, that few iteration steps are required to find the optimized parameter values for parameterizing the controller as the method quickly converges to the minimum or maximum of the cost function at which point the optimized parameter is assumed.

The given invention will be described by the following figures 1 to 9, which exemplarily and non-limiting describe and schematically show preferred embodiments of the invention. In the drawings:

Fig. 1 shows a closed loop control of a technical system with the inventive parameterization unit,
Fig. 2 shows the set point, the closed loop response, the desired output as a function over time,
Fig. 3 shows the determination of a deviation between closed loop response and desired output,
Fig. 4 shows a sketch of the unknown parameter-cost relation over a range of possible parameter values,
Fig.5 shows a stochastic process model and its outputs,
Fig.6 shows the parameter-cost relation modelled with the stochastic process model,
Fig. 7a to 7c show the iterative estimation of the parameter-cost relation over a range of possible parameter value for finding a minimum or maximum of the cost function value,
Fig. 8 shows a process flow chart of the inventive parameterization method and
Fig.9 shows an example of controlling a technical system.

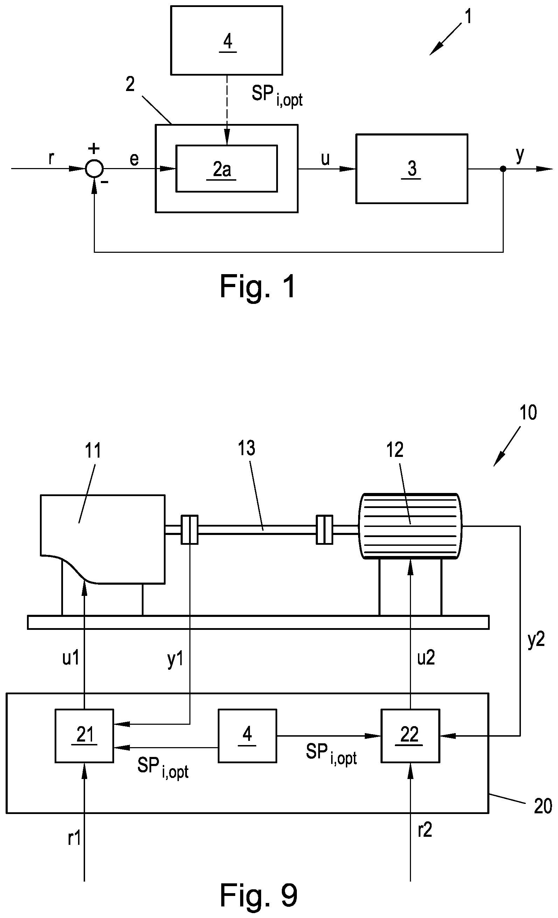

Fig.1 shows an embodiment of a closed loop control 1 of a technical system 3. A technical system 3 could be any kind of system, which can be controlled using a closed loop control 1 like a test bench for vehicles, or part of vehicles (like a drive train), an electrical machine, a manufacturing process, a drive axis, etc. In general, a technical system 3 can be any machine, part of machine or machine function that can be controlled with a closed loop control 1. It is not important for the invention which technical system 3 is controlled with the closed loop control 1, the invention can be applied to any possible controllable technical system 3. One skilled in the art could use the invention for controlling any technical system 3 with a closed loop control 1.

The closed loop control 1 consists of a control unit 2 implementing a controller 2a. The control unit 2 can be a microprocessor-based hardware on which control software is executed. The controller 2a is typically implemented as a piece of software that is executed on the control unit 2. The control unit 2 can also be an integrated circuit, like a field-programmable gate array (FPGA) or an application-specific integrated circuit (ASIC), designed to carry out the desired control function. There are of course also other implementations of a control unit 2 and/or controller 2a conceivable.

The controller 2a could be any type of controller, like a P (proportional), PI (proportional and integral) or PID controller, or a combination of several controllers. The implemented controller 2a defines the control parameters and number of control parameters (at least one) that set the behavior of the controller 2a and of the control loop 1. Dependent on the type of controller 2a different numbers $i \geq 1$ of control parameters $P_i$ may be used in the controller 2a. For simplicity reasons, it is often referred to a controller 2a with only a single control parameter $P_i$, i=1 in the following. But the invention could be used for any number of control parameters $P_i$, $i \geq 1$.

A closed loop control 1 is well-known and is succinctly described in the following to facilitate the understanding of the invention and to define certain values and terms. For the sake of simplicity, all values of the closed loop control 1 are described in the following as being scalars. But it is to mention that all or certain values could also be vectors comprising any number of vector elements, also vectors of different dimensions.

The output y of the technical system 3, represents the actual value of the control. The output y can be directly measured in the technical system 3 using an appropriate sensor, or could indirectly be determined, e.g. by calculating the output y from other available known (e.g. measured) values of the technical system 3. A set point r is provided to the control loop 1, with the set point r usually changing over time. The set point r can be any quantity, e.g. a physical quantity, and depends on the technical system 3. Usually, the set point r is provided by a higher-level control entity, like a simulation unit or process control system, although this is not important for the invention. The main task of the control loop 1, or the controller 2a, is to ensure that the output y follows the set point r. Therefore, the output y (actual value) is fed back and is compared to the set point r to determine the control error e. The control error e is input into the controller 2a which determines a controlled variable u in response to the control error e at the input of the controller 2a. The controlled variable u is the input into the technical system 3 and is used in the technical system 3 to influence the technical system 3, e.g. by actuating certain actuators of the technical system 3, and its output y.

For setting or tuning at least one control parameter $P_i$, with $i \geq 1$, of the control parameters of the controller 2a the control unit 2 is (permanently or temporarily) connected to a parameterization unit 4. The parameterization unit 4 is used for tuning of the controller 2a, i.e. to tune and/or determine an optimum parameter value $SP_{i,opt}$ of at least one control parameter $P_i$, i.e. for parameterization of the controller 2a. The parameterization unit 4 can be used for the initial parameterization of the controller 2a before controlling of the technical system 3 starts and/or for the repeated parameterization of the controller 2a during controlling of the technical system 3 (self-tuning). The parameterization unit 4 uses the inventive method to determine an optimum parameter value $SP_{i,opt}$ of at least one control parameter $P_i$ which will be explained in detail in the following.

It is to understand that the controller 2a may comprise several control parameters, with any number of control parameters possible. The parameterization according to the invention may be used to parameterize at least one ($i \geq 1$) control parameter $P_i$ of the control parameters of the controller 2a, i.e. to set it to its optimized parameter value $SP_{i,opt}$. Other control parameters of the controller 2a, if present, may be parameterized differently, or also with the inventive parameterization method. In a preferred embodiment, all control parameters of the controller 2a are parameterized according to the invention.

The parameterization unit 4 can include microprocessor-based hardware, like a personal computer or a digital signal processor (DSP), which is using a software for the respective function The parameterization unit could also include integrated circuits, like applicant specific integrated circuits (ASIC) or a field programmable gate array (FPGA), or a configurable programmable logic device (CPLD). The parameterization unit 4 can also be implemented as software. The parameterization unit 4 can also be integrated into the control unit 2.

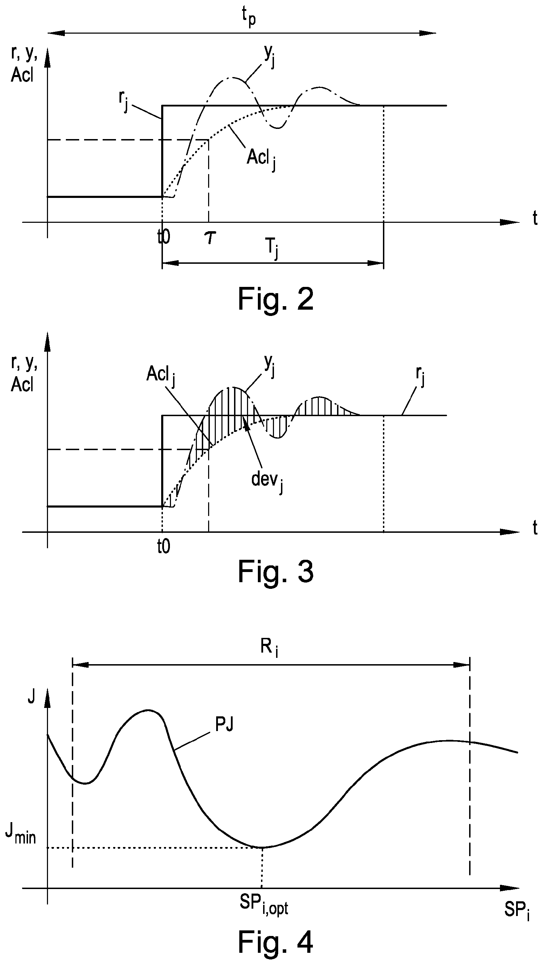

The preparatory steps of the respective method are explained with reference to Fig. 2 by means of three curves in a diagram with the time t on the abscissa and the values for the set point r, the output y and a desired closed loop behavior Acl of the closed loop control 1 on the ordinate. The desired closed loop behavior Acl is how the technical system 3 should respond to a given set point r for the technical system 3 and the output y is how the technical system 3 really responses to the set point r. This response in form of the output y could be measured with suitable measurement sensors, for example

The inventive method is an iterative process wherein j designates the iteration step. In the preparatory steps some definitions and choices are made for the first iteration step j=0. In the following, a double index "ij" is used where necessary, wherein i references the i-th control parameter $P_i$ to be parameterized according to the invention and j references the iteration step. The initialization procedure is designated with j=0, and may also referred to as "start".

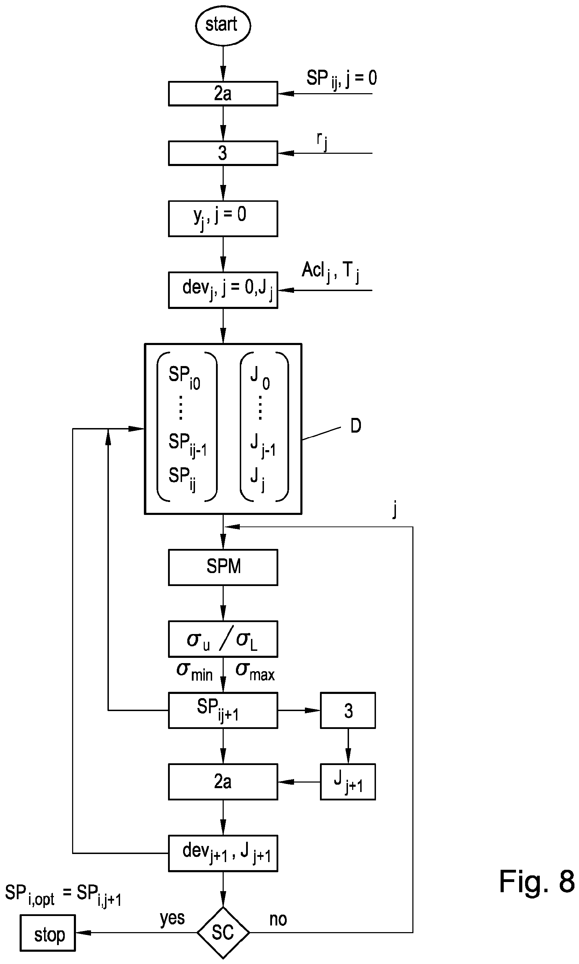

At the beginning of the method (see also Fig.8), at iteration step j=0, the i≥1 control parameter(s) $P_i$ (at least one) of the controller 2a are preliminarily set to certain start values $SP_{ij}$, j=0, e.g. assumed reasonable parameter values $SP_{ij}$ for the control parameter(s) $P_i$ or values known from other similar control loops. The start parameter value $SP_{ij}$, j=0, is chosen within a known range $R_i$ of possible parameter values $SP_i$ of the at least one control parameter $P_i$ of the controller 2a. The range $R_i$ of possible parameter values $SP_i$ is given or can be reasonably chosen in advance. The range $R_i$ of possible parameter values $SP_i$ depends of course on the controller 2a but can also be influenced by certain limitations in the control behavior or the technical system 3. If needed, also the values of further control parameters of the controller 2a are reasonable set. The so chosen parameter values $SP_{ij}$, j=0 are used in the controller 2a as a current parameter value $SP_{iC}$ for the control parameters $P_i$ for controlling the technical system, i.e. the control parameters $P_i$ are parameterized with the current parameter value $SP_{iC}$.

The term "current parameter value $SP_{iC}$" is only used in the description to clearly denominate the parameter value $SP_{ij}$ with which the at least one control parameter $P_i$ of the controller 2a is parameterized in each phase or iteration step j of the inventive method. This means that the at least one control parameter $P_i$ is set to the value of the current parameter value $SP_{iC}$. The current parameter value $SP_{iC}$ represents the parameter value $SP_{ij}$, which is currently (in the current iteration step j) in use in the controller 2a. The current parameter value $SP_{iC}$ will change over the different iteration steps j, but within every iteration step j the current parameter value $SP_{iC}$ remains unchanged.

In the example of Fig. 2, the set point $r_j$ is given in the form of a step at the time t0 and the response of the technical system 3 controlled with the control loop 1 with the controller 2a parameterized with the preliminary start parameter value $SP_{ij}$, j=0, as current parameter value $SP_{iC}$, is shown as output y; (in this case a step response that is often used for tuning a controller). The set point $r_j$ used for parameterization may however be any function over time starting at time to and is not limited to a step. Preferably, the technical system 3 is in a steady-state at time t0. In case of a step as set point $r_j$, the output $y_j$, j=0 of the technical system 3 that is controlled with a controller 2a parameterized with the start parameter value $SP_{ij}$, j=0, as the current parameter value $SP_{iC}$, shows the typical overshoot, ringing and settling time of a step response. The desired closed loop behavior $Acl_j$, j=0, defines the desired response of the technical system 3 for the given set point $r_j$ and is specified. The desired output $Acl_j$ defines the desired behavior of the control and may be dependent on the technical system 3 and the control aim but is considered to be known in any case.

Usually, the overall goal of the control loop 1 is that the output $y_j$ follows the given set point $r_j$ as quickly and as accurate as possible, for example with as little overshoot as possible and with a settling time as short as possible, without causing instability of the control loop 1. This is of course also dependent on the type and implementation of the technical system 3.

The desired closed loop behavior $Acl_j$, j=0 can be defined or chosen in any suitable way. The desired output $Acl_j$ can be defined by one skilled in the art dependent on the control aim and also dependent on the technical system 3. In the case of Fig. 2 the desired closed loop behavior $Acl_j$ of the technical system 3 is exemplarily designed to avoid overshoots and to settle on the set point r within a given time.

Usually, the set point $r_j$ and the desired closed loop behavior $Acl_j$ will be the same in every iteration step j and, hence, needs to be defined only once. But it would also be possible that the desired output $Acl_j$ and/or the set point $r_j$ changes in different iteration steps j.

As preparatory step of the inventive parameterization method, the desired closed loop behavior $Acl_j$ of the technical system 3 is defined over a predefined time interval $T_j$ (e.g. starting from timepoint t0) as response to a given set point $r_j$. The predefined time interval $T_j$ can suitably be chosen, in dependence of the settling time of the closed loop response $y_j$, for example. When a first order response is chosen as desired closed loop behavior $Acl_j$ as in the present example, the predefined time interval $T_j$ is chosen such that the output $y_j$ settles on the set point $r_j$ within the time interval $T_j$. "Settling" means in this connection that the difference between the value of the set point $r_j$ and the value of the desired closed loop behavior $Acl_j$ at a certain time is less than a predefined difference, e.g. less than 1%. A good choice in the case of a step response could be to set the time interval $T_j$ to three times the value of the time $\tau$ where the step response reaches 75% of the steady state output $y_j$ (as indicated in Fig.2).

The predefined time interval $T_j$ can be fixed during the method, i.e. can be the same in every iteration step j. However, if need be, the predefined time interval $T_j$ may also be different in different iteration steps j.

After the above-described preparatory steps, the inventive method starts with iteration j=0 as shown in Fig.3, that shows the same curves as Fig.2. The output $y_j$ is derived by using the chosen start parameter value $SP_{ij}$, j=0, as the current parameter value $SP_{iC}$, for the at least one control parameter $P_i$ in the controller 2a and by controlling the technical system 3 with the such parametrized controller 2a in response to the given set point r (in the example of Fig. 3 a step at time t0).

"Controlling" means that the technical system 3 is operated under control of the controller 2a and in response to the set point $r_j$.

The technical system 3 could, however, also be replaced by a system model that models the behavior of the real technical system 3. The input $u_j$ would be the input into the model and the output $y_j$ the output of the model. The system model would receive the input $u_j$ from the controller 2a. In the case of such a simulation, the output $y_j$ would be calculated by the system model of the technical system 3 in response to the input $u_j$ into the system model of the technical system 3.

The technical system 3 is controlled for given time period $t_p$ that can be longer than or the same as the time interval $T_j$. The start output $y_j$, j=0, is compared to the desired closed loop behavior $Acl_j$, j=0 to determine a deviation $dev_j$ between the determined output $y_j$ and the desired closed loop behavior $Acl_j$ over the time interval $T_j$. The deviation $dev_j$ is therefore a measure of the difference between the desired closed loop behavior $Acl_j$ and the output $y_j$ that appears in response to the controlling of the technical system 3. The deviation $dev_j$ can therefore be expressed as function f of the output $y_j$ and the desired closed loop behavior $Acl_j$, i.e. $dev_j=f(Acl, y_j)$. For the purpose of illustration only, the deviation $dev_j$ is indicated in Fig.3 vertically hatched.

The deviation $dev_j$ can be determined in each iteration step j as difference between the output $y_j$, j=0, and the desired closed loop behavior $Acl_j$ over the time interval $T_j$. To determine the deviation $dev_j$, the output $y_j$ and desired closed loop behavior $Acl_j$ could be sampled with a given sampling time $t_s$ which results in a number of samples $n = T_j/t_S$ for each curve. The difference between the desired closed loop behavior $Acl_j$ and the output $y_j$ at each of the n samples can then be summed which represents an approximation of the area between the desired closed loop behavior $Acl_j$ and the output $y_j$ (vertically hatched area). The deviation $dev_j$ could however also be determined differently, e.g. by integration of the curves over the time interval $T_j$ (also as numerical integration) and subsequent subtraction.

An often-used measure for the deviation $dev_j$ is the mean error or mean squared error between the desired closed loop behavior $Acl_j$ and the closed loop response $y_j$, according to

$$dev_j = \frac{1}{n}\sum_{k=1}^{n}\left(Acl_{jk} - y_{jk}\right)$$

or

$$dev_j = \frac{1}{n}\sum_{k=1}^{n}\left(Acl_{jk} - y_{jk}\right)^2$$

, for example. However, for calculating the deviation $dev_j$ not all n sampled values of the desired closed loop behavior $Acl_j$ and the output $y_j$ must be used.

A cost-function J is used, which is a mathematical function f of the deviation $dev_j$. This can mathematically be expressed as $J = f(dev_j)$. For the example of the mean error or mean squared error as deviation $dev_j$, the cost function J can be expressed as

$$J = \frac{1}{n}\sum_{k=1}^{n}\left(Acl_{jk} - y_{jk}\right)$$

or

$$J = \frac{1}{n}\sum_{k=1}^{n}\left(Acl_{jk} - y_{jk}\right)^2$$

, for example.

In each iteration step j, the same mathematical definition of the cost function J may be used, but the value $J_j$ of the cost function J will change in each iteration step j as the output $y_j$ of the technical system 3 will change in each iteration step j due to the change in the parameter value $SP_{ij}$ in each iteration step j.

Controlling the technical system 3 with a controller 2a parameterized with the current parameter value $SP_{iC}$ results in an output $y_j$ and consequently also in a certain deviation $dev_j$ and in the cost function value $J_j$. The goal is to find the parameter value $SP_{i,opt}$ of the at least one control parameter $P_i$ (that needs to be tuned) that optimizes the cost function J, whereas optimizing means either minimizing or maximizing the cost function J (depending on the definition of the cost function J).

If the cost function value $J_j$ would be determined for all possible parameter values $SP_i$ of the at least one control parameter $P_i$ within the given parameter range $R_i$ of the control parameter value $SP_i$ of the at least one control parameter $P_i$, a parameter-cost-relation PJ would be obtained as shown in Fig.4. In the shown parameter-cost-relation PJ the value of the cost function $J_j$ is given on the ordinate and the parameter values $SP_i$ on the abscissa. The parameter value $SP_{i,opt}$ associated with the optimized (in the example minimized) cost function value $J_{min}$ would then be chosen as optimized parameter value $SP_{i,opt}$ for parameterizing the controller 2a and the technical system 3 could then be controlled with the such parameterized controller 2a.

If more than one control parameter $P_i$ were parameterized with the inventive method, the cost function J would consequently be dependent from several control parameter values $SP_i$. The parameter-cost-relation PJ would then not be a curve as in Fig.4, but a multidimensional surface. This would however not change the inventive method.

It is to note, that the shown curve of the parameter-cost-relation PJ serves only for better understanding of the invention. In a real implementation of the invention, it is not necessary to plot or determine the complete parameter-cost-relation PJ as shown in Fig.4.

However, the parameter-cost-relation PJ is not known in advance and determining the parameter-cost-relation PJ by trying all possible parameter values $SP_i$ within the parameter range $R_j$ would be very time consuming. Therefore, it is the aim of the inventive method to find the optimized parameter value $SP_{i,opt}$ for the at least one control parameter $P_i$ at which the cost function J has a minimum (or maximum, depending on its definition) as quick as possible and with as little effort as possible. This is done in accordance with the invention using a stochastic process model SPM for iteratively modelling the parameter-cost-relation PJ in order to find its minimum (or maximum). This is explained in the following.

A process model usually provides a defined scalar output value for every input value. A stochastic process model SPM, on the other hand, is a finite collection of random variables which have a joint probability distribution PD. In the case of an often-used Gaussian stochastic process model SPM, a collection of random variables which have a joint Gaussian (normal) distribution. A stochastic process model SPM provides as output a probability distribution PD, or variables characterizing the probability distribution PD, like a mean (vector), variance or covariance matrix, in response to a given input.

A multivariate probability distribution PD for a number of random variables is characterized by a mean vector M comprising a number of mean values m and a covariance matrix C. In case of a univariate probability distribution PD by a mean value m and a variance $\sigma^2$.

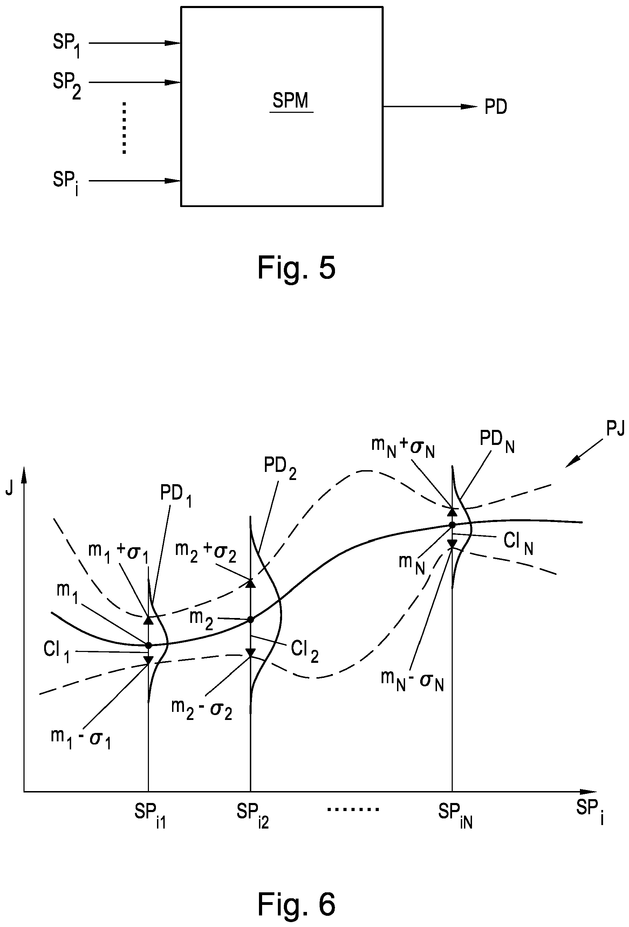

In general terms, a stochastic process model SPM is characterized by a mean vector M and covariance matrix C of the underlaying probability distribution PD and provides therefore as output for a given input a probability distribution PD, as shown in Fig.5 for the i parameter values $SP_i$ to be tuned. As probability distribution PD a Gaussian probability distribution is often used, that, for illustration purposes only, could be plotted as the well-known bell-shaped curve in the case of a univariant distribution.

Note, that the iteration step j is omitted as index in the general explanation of the stochastic process model SPM framework in the following. But the stochastic process model SPM framework is used in every iteration step j of the inventive parameterization method.

A probability distribution PD for the cost function J in dependence of the parameter values $SP_i$ that define the covariance matrix C is given in the form

$$PD\big(J \mid C, SP\big) = \frac{1}{Q} e^{-\frac{1}{2}(J-M)^T C^{-1}(J-M)} = PD\big(M, C\big),$$

with a given or chosen normalising constant Q, a covariance matrix C, a mean vector M, a collection SP of input data in the form of parameter values and a collection J of output data. In the case of a Gaussian process model, the probability distribution PD would be the normal distribution $\mathcal{N}$ .

The collection SP of inputs is a matrix of the form

$$SP = \begin{bmatrix} SP_1 \\ SP_2 \\ \vdots \\ SP_k \\ \vdots \\ SP_N \end{bmatrix} = \begin{bmatrix} SP_{1,1} & SP_{2,1} & \cdots & SP_{i,1} \\ SP_{1,2} & SP_{2,2} & \cdots & SP_{i,2} \\ \vdots & \vdots & \vdots & \vdots \\ SP_{1,k} & SP_{2,k} & \cdots & SP_{i,k} \\ \vdots & \vdots & \vdots & \vdots \\ SP_{1,N} & SP_{2,N} & \cdots & SP_{i,N} \end{bmatrix}$$

with the number i of parameter values $SP_i$ to be tuned and the number N of available inputs. In case of one parameter value $SP_i$, with i=1, to be tuned, the matrix SP is reduced to a vector $[SP_{1,1}, ..., SP_{1,N}]$. The collection J of outputs is a vector of the form

$J = [J_1\ J_2 \cdots J_k \cdots J_N]^T$ comprising the cost function values $J_N$. The mean vector M comprises the mean values m of the probability distribution PD in the form $M = [m_1\ m_2 \cdots m_k \cdots m_N]^T$.

N is the number of available data points, i.e. cost function values $J_N$ for parameter values $SP_N$.

A (Gaussian) stochastic process model SPM can be seen as function that returns for an input a mean value m and a variance $\sigma^2$ (that characterize a probability distribution PD), here the at least one parameter value $SP_i$.

A (Gaussian) stochastic process model SPM for the parameter-cost-relation PJ can therefore be given as

$$SPM: \quad J(SP) \sim PD\big(J \,|\, C, SP\big) = \frac{1}{Q} e^{-\frac{1}{2}(J-M)^T C^{-1}(J-M)} = PD\big(M, C\big).$$

Therein, M is the mean vector and C the covariance matrix of the underlying probability distribution PD that characterizes the stochastic process model SPM. For a Gaussian process model, the probability distribution PD would be a normal distribution $\mathcal{N}$.

The covariance matrix C is constructed with the covariance function c(.,.) (this notation is used to indicate that the covariance functions has two function variables) for every pair of input data points in form of the parameter values $SP_1$, ..., $SP_N$ as function variables according to

$$C = \begin{bmatrix} c(SP_1, SP_1) & \cdots & c(SP_1, SP_N) \\ \vdots & \ddots & \vdots \\ c(SP_N, SP_1) & \cdots & c(SP_N, SP_N) \end{bmatrix}.$$

The usage of the stochastic process model SPM is exemplarily illustrated in Fig.6 in the case of only a single parameter $P_i$, i=1. In this case the mean vector M is reduced to a mean value m of the probability distribution PD for a given parameter value $SP_i$. Fig.6 shows three input data points $SP_{i1}$, $SP_{i2}$, ... , $SP_{iN}$ for the at least one parameter $P_i$ and its corresponding mean values $m_1$, $m_2$, ..., $m_N$ that represent the cost values $J_1$, $J_2$, ..., $J_N$. As every J(SP) is a random variable with probability distribution PD, there is also a variance $\sigma_1{}^2$, $\sigma_2{}^2$, ..., $\sigma_N{}^2$ for every mean value $m_1$, $m_2$, ..., $m_N$. In Fig.6, the standard deviation $\sigma_1$, $\sigma_2$, ..., $\sigma_N$ is shown. This stochastic process model SPM with the probability

$$J_N \sim PD\big(m_N, \sigma_N^2\big)$$

distribution PD can be written in this case as , with the normal distribution $\mathcal{N}$ as probability distribution PD in case of a Gaussian process model.

Shown are also confidence intervals $CI_1$, $CI_2$, ..., $CI_N$ around the mean values $m_1$, $m_2$, ..., $m_N$ as measure of the uncertainty of the estimation that follow from the variances $\sigma_1{}^2$, $\sigma_2{}^2$, ..., $\sigma_N{}^2$, or the standard deviation $\sigma_1$, $\sigma_2$, ..., $\sigma_N$. The confidence interval CI is a specified mathematical function f of the variance $\sigma^2$, $CI=f(\sigma^2)$, for example $CI_1$-$2\sigma_1$, $CI_2$=$2\sigma_2$, ..., $CI_N$-$2\sigma_N$ as in Fig.6. The smaller the variance $\sigma^2$ at a certain parameter value $SP_i$ the more reliable the estimation of the cost function value J(SP) is.

It is to be noted, that for a multivariant stochastic process model SPM it would not be possible to plot it like in Fig.6.

The stochastic process model SPM that models the parameter-cost-relation PJ is however also not known in advance. But the properties of a stochastic process model SPM can be used in an effective way to model the parameter-cost-relation PJ and by that to determine the minimum or maximum of the cost function J in order to find the optimum parameter value $SP_{i,opt}$, as explained in the following.

Instead of parameterizing a parameter $P_i$ of the controller 2a with a certain parameter value $SP_i$ and controlling the technical system 3 with the such parameterized controller 2a for obtaining cost values of the cost function J, the properties of the (Gaussian) stochastic process model SPM can be used to estimate a cost value $\hat{J}_{N+1}$ (estimation or predictions are denominated with the "^" symbol in the following) for a new input in form of parameter values $SP_{N+1}$ = $[SP_{1,N+1} \; SP_{2,N+1} \; ... \; SP_{i,N+1}]$ of the parameters $P_i$ to be tuned according to

$$\begin{bmatrix} J \\ \hat{J}_{N+1} \end{bmatrix} \sim PD\left( \begin{matrix} M \\ m(SP_{N+1}) \end{matrix}, \begin{bmatrix} C & v_{N+1} \\ v_{N+1}{}^T & c\big(SP_{N+1}, SP_{N+1}\big) \end{bmatrix} \right).$$

Therein, $M = [m_1 \cdots m_N]^T$ is the already known mean vector of the probability distribution PD of the stochastic process model SPM and

$v_{N+1}$ = $[c(SP_{N+1}, SP_1) \; c(SP_{N+1}, SP_2) \cdots c(SP_{N+1}, SP_N)]$ the extension of the covariance matrix C stochastic process model SPM with the covariance function c. $m(SP_{N+1})$ represents the function value of a given mean function m(.) (this notation is used to indicate that the mean function has one function variable). For a zero-mean distribution this would be reduced to

$$\begin{bmatrix} J \\ \hat{J}_{N+1} \end{bmatrix} \sim P\left(0, \begin{bmatrix} C & v_{N+1} \\ v_{N+1}{}^T & c\left(SP_{N+1}, SP_{N+1}\right) \end{bmatrix}\right).$$

From that, the output probability distribution PD of the stochastic process model SPM at the new input $SP_{N+1}$ can be predicted as $PD\left(\hat{\mu}_{N+1}, \hat{\sigma}^2_{N+1}\right)$, with the normal distribution $\mathcal{N}$ as probability distribution PD in case of a Gaussian process model. $\hat{\mu}_{N+1}$ is the predicted mean value of the predicted output probability distribution PD and $\hat{\sigma}^2_{N+1}$ the predicted variance of the predicted output probability distribution PD, that are given as $\hat{\mu}_{N+1} = m(SP_{N+1}) + v_{N+1}{}^T C^{-1}(J - M)$ (in case of zero-mean probability distribution PD $\hat{\mu}_{N+1} = v_{N+1}{}^T C^{-1} J$) and

$$\hat{\sigma}^2_{N+1} = c(SP_{N+1}, SP_{N+1}) - v_{N+1}{}^T C^{-1} v_{N+1}$$

with the covariance function c(.,.). The mean value $\hat{\mu}_{N+1}$ of the predicted output probability distribution PD represents the predicted cost function value $\hat{J}_{N+1}(SP_{N+1})$ at the new input $SP_{N+1}$ = $[SP_{1,N+1}, ..., SP_{i,N-1}]$ and $\hat{\sigma}^2_{N+1}$ the variance of the predicted output probability distribution PD. It can be seen, that predictions produced by a stochastic process model SPM depend entirely on the covariance matrix C that is constructed with the covariance function c.

In a (Gaussian) stochastic process model SPM it is also easily possible to consider noise in the observation J(SP). If a known zero-mean noise probability distribution $\mathcal{N}(0, \sigma_{noise}{}^2)$ is assumed, the above equations can simply be expanded as following:

$$C = \begin{bmatrix} c(SP_1, SP_1) & \cdots & c(SP_1, SP_N) \\ \vdots & \ddots & \vdots \\ c(SP_N, SP_1) & \cdots & c(SP_N, SP_N) \end{bmatrix} + \sigma^2_{noise} I$$

$$\hat{\mu}_{N+1} = m(SP_{N+1}) + v_{N+1}{}^T \left[ C + \sigma^2_{noise} I \right]^{-1} (J - M)$$

$$\hat{\sigma}^2_{N+1} = \left[ c(SP_{N+1}, SP_{N+1}) + \sigma^2_{noise} I \right] - v_{N+1}{}^T \left[ C + \sigma^2_{noise} I \right]^{-1} v_{N+1}$$

with the identity matrix I of proper dimension.

In an implementation of the stochastic process model SPM framework, the mean function m(.) and the covariance function c(.,.) are chosen and are considered to be known.

For the mean function m(.) some prior knowledge of the random variable J could be used. For many applications it is reasonable to assume a zero-mean probability distribution PD and, hence, to choose m(.) = 0. The mean function m(.) could however also be any other constant function or any other function, e.g. a polynomial.

As covariance function c(.,.) any function can be chosen which will generate a positive-definite covariance matrix C for any set of function variables (pairs of input points in matrix SP), for example.

A possible covariance function c($SP_a$,$SP_b$) is for example $c(SP_a, SP_b) = \theta_0 e^{\left(-\frac{1}{2\theta^2}\|SP_a - SP_b\|^2\right)}$, wherein $\|.\|$ denotes the distance between two vectors. Another covariance function c($SP_a$,$SP_b$) that has proven to work well and

$$c(SP_a, SP_b) = \theta_0 e^{-\frac{1}{2}\sum_{l=1}^{N} \theta_l (SP_{al} - SP_{bl})^2} + \theta_\eta \delta$$

has been widely used in practice is defined as . Therein, $\delta$ is the Kronecker delta which is defined as $\delta=1$ for $SP_{al}=SP_{bl}$ and $\delta=0$ for $SP_{al}\neq SP_{bl}$. Besides these, there are numerous other covariance function c(.,.) possible. The indexes a, b, I are just used in the definition of the covariance function c(.,.) and represent any pair of available input data points in the matrix SP.

In a covariance function c(.,.) there are often hyperparameters $\theta$ (like $\theta_0$, $\theta_l$, $\theta_\eta$ the above example) used that allow for adaptation of the covariance function c(.,.). The hyperparameters $\theta$ can be given or can be chosen from prior knowledge or can be trained from known data by supervised training. Monte Carlo and maximum likelihood (or evidence maximization) approaches have been widely used to train the hyperparameters $\theta$.

The above (Gaussian) stochastic process model SPM framework allows to find the minimum (or maximum) of the parameter-cost-relation PJ as is explained in the following.

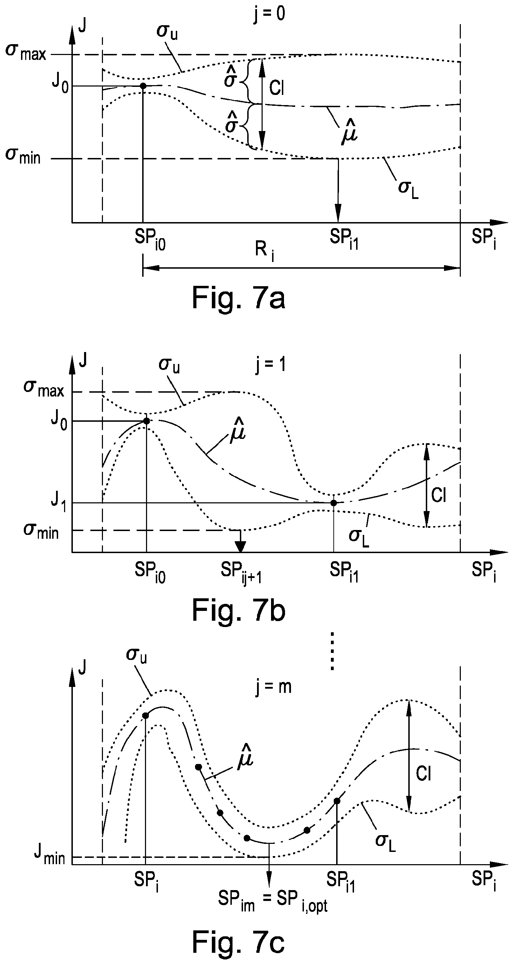

For that the new input $SP_{N+1j}$ is chosen in each iteration step j in such a way that the new prediction $\hat{J}_{N+1j}(S_{PN+1j})$ converges towards the minimum (or maximum). This is explained in the following with reference to Figs.7a to 7c and the flow diagram in Fig.8. It should be noted that Fig.7a to 7c serve only to illustrate the invention. In a real implementation it is not necessary to plot the shown curves.

A training data set D with training data elements $D_j$ are used for training of the stochastic process model SPM. The training data elements $D_j$ of the training data set D in each iteration step j are represented by the known n-tuples $(SP_{ij}, J_j)$ of the i parameter values $SP_{ij} = [SP_{1,1}, ..., SP_{i,N}]_j$ (input data points) to be tuned and the associated cost function values $J_j$ (output data points). For one control parameter $SP_{ij}$ to be tuned, the n-tuple is reduced to a couple (2-tuple).

At the beginning of the iteration (j=0), the training data set D comprises only one training data element $D_j$, namely the parameter values $SP_{ij}$, j=0 and the associated cost function value $J_j$, j=0 that has been determined in the above-described preparatory steps as explained above, for example. The n-tuple of the training data elements $D_j$ at the start of the iteration could however also be chosen properly. In every iteration j, further training data, in the form of a new training data elements $D_j$ (parameter value $SP_{ij}$ and associated cost function value $J_j$) is added to the training data set D. For every iteration step j a new input $SP_{N+1j}$ is chosen, a new observation $J(SP_{N+1j})$ is made as explained above and the (Gaussian) stochastic process model SPM is updated with the new training data element $J(SP_{N+1j})$. This is repeated until the minimum (or maximum) has been found. If needed, the hyperparameters $\theta$ of the covariance function c(.,.) could also be trained in every iteration step j.

To make an observation means, as described above, that the controller 2a is parameterized with the current parameter value $SP_{iC} = SP_{N+1j}$ and the such parameterized controller 2a is used to control the technical system 3. Controlling the technical system 3 happens in that the set point $r_j$ is provided, the output $y_j$ of the technical system in response to the control is determined. With the output $y_j$ and the desired closed loop behavior Acl, the deviation $dev_j$ is determined, from which the cost function value $J_j$ is determined. Hence, making an observation means that the cost function value $J_j$ is determined for a given at least one parameter value $SP_{ij}$.

For implementing the method, a mean function m(.) and a covariance function c(.,.) is chosen, for example as explained above, and is considered to be known.

At the start of the method at iteration step j=0, the training data set D comprises one training data element $(SP_{i0}, Jo)$ as shown in Fig.7a.

With the above (Gaussian) stochastic process model SPM framework it is easily possible in each iteration step j to determine a lower confidence bound $\sigma_L$ and upper confidence bound $\sigma_U$ of the confidence interval CI over the range $R_i$ of possible parameter values $SP_i$, for example from $\hat{\mu}_{N+1} = m(SP_{N+1}) + v_{N+1}{}^T C^{-1}(J - M)$ and

$$\hat{\sigma}_{N+1}^2 = c(SP_{N+1}, SP_{N+1}) - v_{N+1}{}^T C^{-1} v_{N+1}$$

, which is shown in Fig.7a. This means that for different parameter values $SP_i$ over the range $R_i$ as new parameter value $SP_{N+1}$, the predictions of the mean value $\mu_{N+1}$ and of the variance $\hat{\sigma}_{N+1}^2$ of the predicted output probability distribution PD and from that the confidence interval CI (or the corresponding upper confidence bound $\sigma_U$ and lower confidence bound $\sigma_L$) are calculated. This can be done analytically or numerically.

How many new parameter values $SP_{N+1}$ are used in every iteration step j to determine the upper confidence bound $\sigma_U$ and lower confidence bound $\sigma_L$ can be set in advance.

An observation is shown in Fig.7a to 7c as black dots. The predicted mean $\hat{\mu}$ over the range $R_i$ of possible parameter values $SP_i$ is also shown in the figures as well as the confidence interval CI and upper confidence bound $\sigma_U$ and lower confidence bound $\sigma_L$ over the range $R_i$. The confidence interval CI is for example defined by the standard deviation $\sigma$, as indicated in Fig.7a.

In general, the lower confidence bound $\sigma_L$ and the upper confidence bound $\sigma_U$ for a new parameter value $SP_{N+1}$

can for example be expressed as $\sigma_L = \hat{\mu}_{N+1} - \kappa\hat{\sigma}_{N+1}$ and $\sigma_U = \hat{\mu}_{N+1} + \kappa\hat{\sigma}_{N+1}$. The parameter $\kappa \geq 0$ can be chosen.

This means that with the stochastic process model SPM framework a prediction of the parameter-cost-relation PJ can be determined in every iteration step j based on the known data points in every iteration j and based on the stochastic process model SPM. As every iteration j adds new data points, the prediction of the parameter-cost-relation PJ becomes better and better and allows modelling of the parameter-cost-relation PJ.

In a next step, in every iteration j, a minimum $\sigma_{min}$ of the lower confidence bound $\sigma_L$, or a maximum $\sigma_{max}$ of the upper confidence bound $\sigma_U$, of the confidence interval CI in the range $R_i$ of possible parameter values $SP_i$ is determined, which can be done numerically or analytically, for example.

This is shown in Fig.7a for the parameter value $SP_{i1}$ at a minimum of the lower confidence bound $\sigma_L$. The such chosen parameter value $SP_{ij+1}$ associated to the determined minimum $\sigma_{min}$, or maximum $\sigma_{max}$, is used as new current parameter value $SP_{iC}$ in the next iteration step j+1 and to make a new observation in the next iteration step j+1. The determined new parameter value $SP_{ij+1}$ at the minimum $\sigma_{min}$ of the lower confidence bound $\sigma_L$, or the maximum $\sigma_{max}$ of the upper confidence bound $\sigma_U$, and associated new cost value $J_{ij+1}$ that results from the new observation are then added as new training data elements to the training data set D for the next iteration j+1. This means that in every iteration j more data points are available which allow better predictions with the stochastic process model SPM updated in each iteration step j framework.

This procedure is repeated for a number m of iteration steps j until a predefined stopping criterion SC is met.

It should be mentioned again that it is possible to use differently defined cost functions J and/or to use different set points $r_j$ and/or to use different desired closed loop behavior $Acl_j$ in different iterations j, Preferably, the definition of the cost function J, the set point $r_j$ and the closed loop behavior $Acl_j$ remain the same in all iterations j. It is also possible to alter the predefined time interval $T_j$ in different iterations.

A second iteration j=1 is exemplarily shown in Fig.7b. The updated (Gaussian) stochastic process model SPM framework now comprises two data points in the training data set D as training data elements $(SP_{i0}, J_0)$, $(SP_{i1}, J_1)$ and, consequently, an updated mean vector M and covariance matrix C of the underlaying probability distribution PD of the stochastic process model SPM. With the updated (Gaussian) stochastic process model SPM, new predicted mean $\mu$ and new lower confidence bound $\sigma_L$ and upper confidence bound $\sigma_U$ over the range $R_i$ result. This leads to a new minimum $\sigma_{min}$ of the lower confidence bound $\sigma_L$, or a new maximum $\sigma_{max}$ of the upper confidence bound $\sigma_U$, and to the next selected parameter value $SP_{ij+1}$ for the next iteration j+1.

Fig.7c shows the last iteration j=m with a number of data points. The parameter value $SP_{im}$ determined in this iteration step j=m at the minimum $\sigma_{min}$ of the lower confidence bound $\sigma_L$ is used as optimized parameter value $SP_{i,opt}$.

By choosing the minimum of the lower confidence bound $\sigma_L$ to select the parameter value $SP_{ij+1}$ or by choosing the maximum of the upper confidence bound $\sigma_U$ to select the next parameter value $SP_{ij+1}$ for the next iteration step j+1, the cost function value $J_j$ at which the next parameter value $SP_{ij+1}$ is chosen quickly converges to its minimum $J_{min}$ or maximum $J_{max}$ in the range $R_i$ as the confidence interval CI is getting narrower with increasing number of data points.

A predefined stopping criterion SC can be a given number m of iterations j, for example. Five to ten iteration could be enough to find the optimized parameter value $SP_{i,opt}$. The iteration could also end when the difference between parameter values $SP_{ij}$, $SP_{ij+1}$ of two consecutive iterations j, j+1 is smaller than a given limit value. Also, alternative stopping criterions SC could be defined.

The described inventive parameterization of the controller 2a may be repeated when needed, for example case the technical system 3 shows degradation, or regularly at given time intervals.

The given method may also be used as a tool for quality control in order to analyze a degradation behavior of the technical system 3. A shift in the determined optimized value $SP_{i,opt}$ may indicate a need for a technical service and/or a change of the technical system 3.

Fig.9 show a possible application of the inventive method. Fig.9 shows a test bench 10 with a unit under test 11, in the embodiment shown an electrical motor or a combustion engine, and a dynamometer 12 that are coupled via a drive shaft 13. The unit under test 11 and the dynamometer 12 are both technical systems 3 controlled by means of closed control loop. The unit under test 11 could also be a drive train or part of a drive train comprising a drive machine, like a combustion engine or electrical motor, or both (like in a hybrid drive train).

The unit under test 11 and the dynamometer 12 are controlled by a test bench control unit 20 (e.g. a computer or microprocessor based hardware) according to given set points r1, r2, that are provided by a desired test to be carried out on the test bench. In the test bench control unit 20 controllers 21, 22 are provided (usually as piece of software) for controlling the unit under test 11 and the dynamometer 12. Shown are also the manipulated variables u1, u2 calculated by the controllers 21, 22 in response to the respective setpoints r1, r2 (e.g. speed or torque values) and actual values y1, y2 (outputs of the respective technical system, e.g. speed or torque). The controller 21, 21 implement a certain control law (e.g. a PI, PID controller), in each case with at least one control parameter $SP_i$. The at least one control parameter $SP_i$ of at least one of the technical systems, i.e. the unit under test 11 or the dynamometer 12, is determined according to the inventive method by mean of a parameterization unit 4 (e.g. a piece of software).

**Claims**

1. Method for controlling a technical system (3) with a closed loop control (1) with a controller (2a) having at least one control parameter ($P_i$), wherein the at least one control parameter ($P_i$) of the controller (2a) is tuned by setting a parameter value ($SP_i$) of the at least one control parameter ($P_i$) to an optimized parameter value ($SP_{i,opt}$) and wherein the technical system (3) is controlled with the at least one control parameter ($P_i$) being parametrized with the value of the optimized parameter value ($SP_{i,opt}$), wherein the optimized parameter value ($SP_{i,opt}$) for the parameter value ($SP_i$) is derived using following steps:

   a) choosing a parameter value ($SP_{ij}$) at the start of the method with iteration step j=0 in a given range ($R_i$) of possible parameter values ($SP_i$) of the at least one control parameter ($P_i$) as a current parameter value ($SP_{ic}$);
   b)

       i. setting the parameter value ($SP_i$) of the control parameter ($Pj$) of the controller (2a) to the value of the current parameter value ($SP_{ic}$) and controlling the technical system (3) with the such parameterized controller (2a) in response to a given setpoint ($r_j$) of the closed loop control (1);
       ii. determining an output ($y_j$) of the technical system (3) whilst controlling the technical system (3) for a predefined time interval ($T_j$);
       iii. determining a deviation ($dev_j$) between a given desired closed loop behavior (Acl) and the determined output ($y_j$) of the technical system (3) over the predefined time interval ($T_j$),
       iv. using a predefined cost function (J) as a function of the deviation ($dev_j$) and calculating a cost function value ($J_j$) for the determined deviation ($dev_j$) with the predefined cost function (J),
       v. adding the parameter value ($SP_{ij}$) and the associated calculated cost function value ($J_j$) as training data elements to a training data set (D);

   c) using a stochastic process model (SPM) to model a parameter-cost-relation (PJ) in the possible range (Rj) of parameter values ($SP_i$), the parameter-cost-relation (PJ) defining a dependence of the cost function value ($J_j$) from the parameter value ($SP_i$) of the at least one parameter ($P_i$), whereas the stochastic process model (SPM) provides a predicted mean value $\hat{\mu}_{N+1}$, a predicted variance $\hat{\sigma}^2_{N+1}$ and an upper confidence bound $\sigma_U$ and/or a lower confidence bound $\sigma_L$ around the predicted mean value $\mu_{N+1}$ for different parameter values ($SP_{N+1j}$) of the at least one control parameter ($Pj$) in the possible range ($R_i$) of the parameter value ($SP_i$);
   d) finding a minimum ($\sigma_{min}$) of the lower confidence bound ($\sigma_L$) or a maximum ($\sigma_{max}$) of the upper confidence bound ($\sigma_U$) in the possible range ($R_i$) of parameter values ($SP_i$) and determining a new parameter value ($SP_{ij+1}$) associated to the minimum ($\sigma_{min}$) or maximum ($\sigma_{max}$);
   e) repeating steps b. to d. in a number of iterations j until a predefined stopping criterion (SC) is met, whereas the determined new parameter value ($SP_{ij+1}$) is used as current parameter value (SPic) in the following iteration j+1, and wherein the last determined new parameter value ($SP_{ij+1}$) in the last iteration, is used as the optimized parameter value ($SP_{i,opt}$) of the at least one control parameter ($P_i$).

2. Method according to claim 1, **characterized in that** the lower confidence bound $\sigma_L$ at a parameter value ($SP_{N+1j}$) is defined as $\sigma_L = \hat{\mu}_{N+1} - \kappa\hat{\sigma}_{N+1}$ and/or an upper confidence bound $\sigma_U$ at a parameter value ($SP_{N+1j}$) is defined as $\sigma_U = \hat{\mu}_{N+1} + \kappa\hat{\sigma}_{N+1}$, with a given parameter $\kappa$.

3. Method according to claim 1 or 2, **characterized in that** the stochastic process model uses a probability distribution

$$PD(J \mid C, SP) = \frac{1}{Q} e^{-\frac{1}{2}(J-M)^T C^{-1}(J-M)} = PD(M, C)$$

, with a given normalising constant Q, a covariance matrix C, a mean vector M, a matrix SP of input data in the form of parameter values and a vector J of output data in the form of cost function values, whereas for a number N of data points the matrix SP of inputs is a matrix of the form

$$ SP = \begin{bmatrix} SP_1 \\ SP_2 \\ \vdots \\ SP_k \\ \vdots \\ SP_N \end{bmatrix} = \begin{bmatrix} SP_{1,1} & SP_{2,1} & \cdots & SP_{i,1} \\ SP_{1,2} & SP_{2,2} & \cdots & SP_{i,2} \\ \vdots & \vdots & \vdots & \vdots \\ SP_{1,k} & SP_{2,k} & \cdots & SP_{i,k} \\ \vdots & \vdots & \vdots & \vdots \\ SP_{1,N} & SP_{2,N} & \cdots & SP_{i,N} \end{bmatrix}, $$

the mean vector M is a vector of the form $M = [m_1\ m_2\ \cdots\ m_k\ \cdots\ m_N]^T$ with the mean values m of the probability distribution, the vector J is a vector of the form $J = [J_1\ J_2\ \cdots\ J_k\ \cdots\ J_N]^T$ and the covariance matrix is constructed with a given covariance function c(.,.) in the form

$$ C = \begin{bmatrix} c(SP_1, SP_1) & \cdots & c(SP_1, SP_N) \\ \vdots & \ddots & \vdots \\ c(SP_N, SP_1) & \cdots & c(SP_N, SP_N) \end{bmatrix}. $$

4. Method according to claim 3, **characterized in that** the predicted mean value $\mu_{N+1}$, is calculated as $\mu_{N+1} = m(SP_{N+1})$ + $v_{N+1}{}^T C^{-1}(J - M)$ and the predicted variance $\hat{\sigma}^2_{N+1}$ is calculated as $\hat{\sigma}^2_{N+1} = c(SP_{N+1}, SP_{N+1}) - v_{N+1}{}^T C^{-1} v_{N+1}$ with $m(SP_{N+1})$ representing a function value of a given mean function m(.) at the parameter value $SP_{N+1}$, and $v_{N+1}$ = $[c(SP_{N+1}, SP_1)\ c(SP_{N+1}, SP_2)\ \cdots\ c(SP_{N+1}, SP_N)]$ is the extension of the covariance matrix C with the covariance function c(.,.).

5. Method according to claim 4, **characterized in that** in case of noise with a zero-mean noise normal probability distribution $\mathcal{N}(0, \sigma_{\text{noise}}{}^2)$, the covariance matrix $C = \begin{bmatrix} c(SP_1, SP_1) & \cdots & c(SP_1, SP_N) \\ \vdots & \ddots & \vdots \\ c(SP_N, SP_1) & \cdots & c(SP_N, SP_N) \end{bmatrix} + \sigma^2_{noise} I$, the prediceted mean value $\hat{\mu}_{N+1} = m(SP_{N+1}) + v_{N+1}{}^T \left[ C + \sigma^2_{noise} I \right]^{-1} (J - M)$ and the predicted variance $\hat{\sigma}^2_{N+1} = \left[ c(SP_{N+1}, SP_{N+1}) + \sigma^2_{noise} I \right] - v_{N+1}{}^T \left[ C + \sigma^2_{noise} I \right]^{-1} v_{N+1}$ are used.

6. Method according to any of claims 3 to 5, **characterized in that** the probability distribution PD is a normal distribution $\mathcal{N}$.

7. Method according to any of claims 3 to 6, **characterized in that** the probability distribution PD is a zero-mean distribution and $m(SP_{N+1}) = 0$.

Fig. 1

Fig. 9

Fig. 2

Fig. 3

Fig. 4

Fig. 5

Fig. 6

Fig. 7a

Fig. 7b

Fig. 7c

Fig. 8

| | Europäisches Patentamt<br>European Patent Office<br>Office européen des brevets | **EUROPEAN SEARCH REPORT** | Application Number<br>**EP 22 21 4968** |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHEN HEPING ET AL: "Controller parameter optimization for complex industrial system with uncertainties",<br>MEASUREMENT AND CONTROL.,<br>vol. 52, no. 7-8,<br>24 June 2019 (2019-06-24), pages 888-895,<br>XP093050354,<br>GB<br>ISSN: 0020-2940, DOI:<br>10.1177/0020294019830108<br>Retrieved from the Internet:<br>URL:http://journals.sagepub.com/doi/full-x ml/10.1177/0020294019830108><br>* page 888 - page 891 *<br>----- | 1-7 | INV.<br>G05B13/02 |
| X | MARCELLO FIDUCIOSO ET AL: "Safe Contextual Bayesian Optimization for Sustainable Room Temperature PID Control Tuning",<br>ARXIV.ORG, CORNELL UNIVERSITY LIBRARY, 201 OLIN LIBRARY CORNELL UNIVERSITY ITHACA, NY 14853,<br>28 June 2019 (2019-06-28), XP081385431,<br>* page 2 - page 5 *<br>----- | 1-7 | |
| | | | TECHNICAL FIELDS SEARCHED (IPC)<br><br>G05B |

The present search report has been drawn up for all claims

| Place of search | Date of completion of the search | Examiner |
|---|---|---|
| The Hague | 30 May 2023 | Bassi, Luca |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **G. GREGORČIČ ; G. LIGHTBODY.** A comparison of multiple model and pole-placement self-tuning for the control of highly nonlinear processes. *Proceedings of the Irish Signals and Systems Conference,* June 2000, 303-311

- **G. GREGORČIČ ; G. LIGHTBODY.** Nonlinear model based control of highly nonlinear processes. *Computer & Chemical Engineering,* August 2010, vol. 34 (8), 1268-1281